# EUROPEAN PATENT SPECIFICATION

(11) **EP 1 951 807 B1**
(45) Date of publication and mention of the grant of the patent: **04.01.2012**
(21) Application number: 06850789.6
(22) Date of filing: 20.11.2006
(51) Int. Cl.: C08L 27/06, C08K 5/12

(54) **USE OF A BLEND OF PHTHALATE PLASTICIZERS IN POLY(VINYL HALIDE) COMPOUNDS**
VERWENDUNG EINER MISCHUNG AUS PHTHALAT-WEICHMACHERN IN POLY(VINYL-HALID)-VERBINDUNGEN
UTILISATION D'UN MÉLANGE DE PLASTIFIANTS PHTALATE DANS DES POLYHALOGÉNURES DE VINYLE

(30) Priority: 23.11.2005 US 739616 P
(43) Date of publication of application: 06.08.2008
(73) Proprietor: PolyOne Corporation, Avon Lake, OH 44012 (US)
(72) Inventor: SHOEMAKER, Craig, North Ridgeville, Ohio 44039 (US)
(74) Representative: Winter, Brandl, Fürniss, Hübner, Röss, Kaiser, Polte - Partnerschaft
(86) International application number: PCT/US2006/061092
(87) International publication number: WO 2007/120278

(56) References cited:
- EP-A1- 1 505 104
- WO-A-02/02499
- WO-A-2007/021987
- WO-A1-2005/021482
- JP-A- 4 104 740
- JP-A- 7 179 699
- KR-A- 19980 026 369
- DATABASE WPI Week 199406 Thomson Scientific, London, GB; AN 1994-045559 XP002536565 & JP 06 001900 A (CHISSO CORP) 11 January 1994 (1994-01-11)

## Description

### CLAIM OF PRIORITY

This application claims priority from U.S. Provisional Patent Application Serial Number 60/739,616 bearing Attorney Docket Number 12005016 and filed on November 23, 2005, which is incorporated by reference.

### FIELD OF THE INVENTION

This invention concerns a blend ofphthalates to plasticize poly(vinyl halide) compounds.

### BACKGROUND OF THE INVENTION

People benefit from plastic articles. From their invention in the mid-20th Century until the present, thermoplastic polymers have become the composition of many consumer products. Such products are relatively lightweight, sturdy, and corrosion resistant.

Plasticized poly(vinyl chloride), invented by Waldo Semon of B.F. Goodrich, has been a top performing plastic resin for decades. Millions of kilograms of poly(vinyl chloride) (also known as "PVC") resin are molded and extruded each year into countless products. With conventional additives, poly(vinyl chloride) provides unparalleled durability, flame resistance, chemical resistance, weatherability, electrical properties and clarity to name a few. WO 02/02499 discloses plasticized PVC compound comprising blends of phthalic and diesters.

Wire and cable manufacturers often use plasticized PVC for insulation and sheathing. Performance of plasticized PVC compound at various temperatures is predicted based on accelerated oven aging tests. A cable rated at 60°C by Underwriters' Laboratories (UL) is tested at 100°C for seven days, whereas a cable rated at 75°C is tested at 100°C for ten days. Some plasticizers such as di-isodecylphthalate (DIDP) and dipropylheptylphthalate (DPHP) perform well enough to pass accelerated aging tests at the 60°C and 75°C ratings.

However, DPHP does not perform adequately at the UL rating of 90°C compared with DIDP, an accelerated oven aging test of 121°C at seven days.

### SUMMARY OF THE INVENTION

What is needed in the art is a means to permit DPHP to achieve the 90°C rating, because DPHP has other economic benefits in the market of plasticizers for PVC compounds.

The present invention solves that problem by blending a second plasticizer with DPHP that is less volatile than DPHP, such that a blend of the two plasticizers can achieve the 90°C rating and perform equally as well as DIDP alone, thereby permitting the makers of PVC compounds to enjoy other economic benefits of DPHP in the market.

One aspect of the present invention is a polyvinyl chloride compound comprising (a) polyvinyl chloride and (b) a blend of dipropylheptylphthalate and a second plasticizer less volatile than dipropylheptylphthalate.

Another aspect of the present invention is the polyvinyl chloride compound described above, wherein the second plasticizer is a phthalate plasticizer having more than ten carbon atoms extending from any ester linkage of the phthalate moiety.

Another aspect of the present invention is the polyvinyl chloride compound described above, wherein the second plasticizer is di-undecylphthalate plasticizer (DUP), which is less volatile than DPHP.

While not being limited to a particular theory, it is believed that the addition of a less volatile plasticizer helps to offset the volatility of DPHP sufficiently to permit a blend of DPHP and other plasticizer to achieve a 90°C rating when the DPHP alone can not.

Additional advantages of the invention are explained in reference to embodiments of the invention.

### EMBODIMENTS OF THE INVENTION

Polyvinyl Chloride Resins

Polyvinyl chloride polymers are widely available throughout the world. Polyvinyl chloride resin as referred to in this specification includes polyvinyl chloride homopolymers, vinyl chloride copolymers, graft copolymers, and vinyl chloride polymers polymerized in the presence of any other polymer such as a HDT distortion temperature enhancing polymer, impact toughener, barrier polymer, chain transfer agent, stabilizer, plasticizer or flow modifier.

For example a combination of modifications may be made with the PVC polymer by overpolymerizing a low viscosity, high glass transition temperature (Tg) enhancing agent such as SAN resin, or an imidized polymethacrylate in the presence of a chain transfer agent.

In another alternative, vinyl chloride may be polymerized in the presence of said Tg enhancing agent, the agent having been formed prior to or during the vinyl chloride polymerization. However, only those resins possessing the specified average particle size and degree of friability exhibit the advantages applicable to the practice of the present invention.

In the practice of the invention, there may be used polyvinyl chloride homopolymers or copolymers of polyvinyl chloride comprising one or more comonomers copolymerizable therewith. Suitable comonomers for vinyl chloride include acrylic and methacrylic acids; esters of acrylic and methacrylic acid, wherein the ester portion has from 1 to 12 carbon atoms, for example methyl, ethyl, butyl and ethylhexyl acrylates and the like; methyl, ethyl and butyl methacrylates and the like; hydroxyalkyl esters of acrylic and methacrylic acid, for example hydroxymethyl acrylate, hydroxyethyl acrylate, hydroxyethyl methacrylate and the like; glycidyl esters of acrylic and methacrylic acid, for example glycidyl acrylate, glycidyl methacrylate and the like; alpha, beta unsaturated dicarboxylic acids and their anhydrides, for example maleic acid, fumaric acid, itaconic acid and acid anhydrides of these, and the like; acrylamide and methacrylamide; acrylonitrile and methacrylonitrile; maleimides, for example, N-cyclohexyl maleimide; olefin, for example ethylene, propylene, isobutylene, hexene, and the like; vinylidene halide, for example, vinylidene chloride; vinyl ester, for example vinyl acetate; vinyl ether, for example methyl vinyl ether, allyl glycidyl ether, n-butyl vinyl ether and the like; crosslinking monomers, for example diallyl phthalate, ethylene glycol dimethacrylate, methylene bis-acrylamide, triacrylyl triazine, divinyl ether, allyl silanes and the like; and including mixtures of any of the above comonomers.

The preferred composition is a polyvinyl chloride homopolymer.

Commercially available sources of polyvinyl chloride polymers include Oxyvinyls LP of Dallas, TX and Shin Tech USA of Freeport, TX.

PVC Compounds

Flexible PVC resin compounds typically contain a variety of additives selected according to the performance requirements of the article produced therefrom well within the understanding of one skilled in the art without the necessity of undue experimentation.

The PVC compounds used herein contain effective amounts of additives ranging from 0.01 to about 500 weight parts per 100 weight parts PVC (parts per hundred resin- phr). -

For example, various primary and/or secondary lubricants such as oxidized polyethylene, paraffin wax, fatty acids, and fatty esters and the like can be utilized.

Thermal and ultra-violet light (UV) stabilizers can be utilized such as various organo tins, for example dibutyl tin, dibutyltin-S-S'-bi-(isooctylmercaptoacetate), dibutyl tin dilaurate, dimethyl tin diisooctylthioglycolate, mixed metal stabilizers like Barium Zinc and Calcium Zinc, and lead stabilizers (tri-basic lead sulfate, di-basic lead phthalate, for example). Secondary stabilizers may be included for example a metal salt of phosphoric acid, polyols, and epoxidized oils. Specific examples of salts include water-soluble, alkali metal phosphate salts, disodium hydrogen phosphate, orthophosphates such as mono-, di-, and tri-orthophosphates of said alkali metals, alkali metal polyphosphates, -tetrapolyphosphates and -metaphosphates and the like. Polyols such as sugar alcohols, and epoxides such as epoxidized soybean oil can be used. Typical levels of secondary stabilizers range from about 0.1 wt. parts to about 10.0 wt. parts per 100 wt. parts PVC (phr).

In addition, antioxidants such as phenolics, BPA, BHT, BHA, various hindered phenols and various inhibitors like substituted benzophenones can be utilized.

When increased impact values are desired, impact modifiers can be included which are known to the art. For example, various impact modifiers are set forth in The Encyclopedia of PVC, Volume 2, Chapter 12, Marcel Dekker, Inc., New York, 1977. Specific examples of impact modifiers include various acrylonitrile-butadiene-styrene (ABS) polymers, the various chlorinated polyethylenes, the various graft copolymers of acrylic rubbers, the various poly(ethylene-co-vinyl acetates), graft copolymers of methylmethacrylate, butadiene and styrene (MBS), graft copolymers of acrylonitrile, butadiene and styrene (ABS) and the like. Impact modifiers of these types are commercially available. Preferred impact modifiers include ABS, MBS, graft copolymers of acrylic rubbers, chlorinated polyethylene and mixtures. Regardless of the particular impact modifier utilized, the amounts thereof can naturally vary, depending upon the desired impact strength as typically measured by an Izod impact test (ASTM D256). The levels of impact modifier present typically vary from about 3 to about 30 phr. Accordingly, articles derived from the powder compounds of the present invention have the capacity to be impact-modified to achieve notched Izod values generally in excess of in excess of 100 N/m2 if desired.

Various processing aids, fillers, pigments, flame retardants and reinforcing materials can also be utilized in amounts up to about 200 or 300 phr. Exemplary processing aids are acrylic polymers such as poly methyl (meth)acrylate based materials.

Adjustment of melt viscosity can be achieved as well as increasing melt strength by employing 0.5 to 5 phr of commercial acrylic process aids such as those from Rohm and Haas under the Paraloid® trademark. Paraloid®. K-120ND, K-120N, K-175; and other processing aids are disclosed in The Plastics and Rubber Institute: International Conference on PVC Processing, Apr. 26-28 (1983), Paper No. 17.

Examples of fillers include calcium carbonate, clay, silica and various silicates, talc, carbon black and the like. Reinforcing materials include glass fibers, polymer fibers and cellulose fibers. Such fillers are generally added in amounts of from about 3 to about 500 phr of PVC. Preferably from 3 to 300 phr of filler are employed for extruded profiles such as louvers or cove base molding. Also, flame retardant fillers like ATH (Aluminum trihydrates), AOM (ammonium octamolybdate), antimony trioxides, magnesium oxides and zinc borates are added to boost the flame retardancy of polyvinyl chloride. The concentrations of these fillers range from 1 phr to 200 phr.

Examples of various pigments include titanium dioxide, carbon black and the like. Mixtures of fillers, pigments and/or reinforcing materials also can be used.

The compound of the present invention can include other conventional plastics additives in an amount that is sufficient to obtain a desired processing or performance property for the compound. The amount should not be wasteful of the additive nor detrimental to the processing or performance of the compound. Those skilled in the art of thermoplastics compounding, without undue experimentation but with reference to such treatises as Plastics Additives Database (2004) from Plastics Design Library (www.williamandrew.com), can select from many different types of additives for inclusion into the compounds of the present invention.

Non-limiting examples of other optional additives include adhesion promoters; biocides (antibacterials, fungicides, and mildewcides), anti-fogging agents; anti-static agents; bonding, blowing and foaming agents; dispersants; fillers and extenders; fire and flame retardants and smoke suppresants; impact modifiers; initiators; lubricants; micas; pigments, colorants and dyes; plasticizers; processing aids; release agents; silanes, titanates and zirconates; slip and anti-blocking agents; stabilizers; stearates; ultraviolet light absorbers; viscosity regulators; waxes; and combinations of them.

Blend of Plasticizers

As explained above, a second, less volatile plasticizer has been found to permit a polyvinyl chloride compounding plasticized with DPHP to achieve a 90°C rating, which is significant for usage of such compounds in the wire and cable industry requiring insulation or sheathing requiring such a rating.

The second plasticizer is preferably another phthalate plasticizer and more preferably one having more than ten carbon atoms extending from each ester linkage of the phthalate moiety. Non-limiting examples of second plasticizers to be blended with DPHP include DUP, ditridecyl phthalate (DTDP) and undecyl phthalate (UDP)

Most preferably, the second plasticizer is DUP, as explained above.

The ratio of DPHP:DUP in the blend of plasticizers can range from about 10:1 to about 1:3, and preferably from about 5:1 to about 2:1.

The parts by weight of the plasticizer blend in the PVC compound can range from about 10 to about 150, and preferably from about 30 to about 90 parts per 100 parts of PVC.

DPHP is commercially available from BASF Corporation of Florham Park, New Jersey, USA. DUP is commercially available from many manufacturers such as BASF, PolyOne Corporation of Avon Lake, OH, USA, and ExxonMobil of Houston, Texas, USA.

Processing

The preparation of compounds of the present invention is uncomplicated. The compound of the present can be made in batch or continuous operations from a powder blend which is typically prepared in a batch-wise operation.

Such powder blending in a batch process typically occurs in a powder mixer such as a Henschel or Littleford mixer, or a ribbon blender that physically mixes all the additives including plasticizers with PVC resin without bringing the polymer matrix to a melting temperature. The mixing speeds range from 60 to 3000 rpm and temperature of mixing can be ambient up to 121°C (250 F). The output from the mixer is a well blended powder product that can flow into a machine that can bring up the blend temperature to induce melting of some ingredients including the PVC resin.

Mixing in a batch process typically occurs in a Banbury mixer that is also elevated to a temperature that is sufficient to melt the polymer matrix to permit addition of the solid ingredient additives of any optional additive. The mixing speeds range from 60 to 3000 rpm and temperature of mixing ranges from 120°C to 220°C (250°F to 430°F). Also, the output from the mixer is chopped into smaller sizes for later extrusion or molding into polymeric articles.

Compounds can be formed into powder, cubes, or pellets for further extrusion or molding into polymeric components and parts.

Subsequent extrusion or molding techniques are well known to those skilled in the art of thermoplastics polymer engineering. Without undue experimentation but with such references as "Extrusion, The Definitive Processing Guide and Handbook"; "Handbook of Molded Part Shrinkage and Warpage"; "Specialized Molding Techniques"; "Rotational Molding Technology"; and "Handbook of Mold, Tool and Die Repair Welding", all published by Plastics Design Library (www.williamandrew.com), one can make articles of any conceivable shape and appearance using compounds of the present invention.

### USEFULNESS OF THE INVENTION

Underwriters' Laboratories (UL) perform testing to determine the ratings for wire and cable articles. While articles with a 60°C or a 75°C UL rating are useful, there are several types of constructions which require a UL rating of 90°C or higher ratings. Non-limiting examples of them are low voltage power cables like tray cables, building wires with ratings of THW, THHN and THWN, telecommunications cables, apparatus wires and electric cords. Further evidence of the invention is found in the following examples.

### EXAMPLES

Table 1 shows the ingredients for Examples 1 - 3 and Comparative Examples A and B. Table 2 shows the processing conditions for making the samples of Examples 1-3 and Comparative Examples A and B. Table 3 shows the results of testing that demonstrate how a plasticizer blend of DPHP/DUP can function equivalently in achieving the UL 90°C rating.

The testing for UL 90°C is dictated by UL 1581 standard.

| **Table 1 - Ingredients in Parts** | | | | | |
|---|---|---|---|---|---|
| Example | A | B | 1 | 2 | 3 |
| PVC Suspension Resin | 100.000 | 100.000 | 100.000 | 100.000 | 100.000 |
| Naflosafe PKP-1152 Calcium Zinc stabilizer | 3.000 | 3.000 | 3.000 | 3.000 | 3.000 |
| Bisphenol A Antioxidant | 0.000 | 0.250 | 0.250 | 0.250 | 0.250 |
| Calcium Stearate Lubricant | 0.500 | 0.500 | 0.500 | 0.500 | 0.500 |
| Oxybenzophenone Type 531UV Stabilizer | 0.350 | 0.350 | 0.350 | 0.350 | 0.350 |
| Calcium Carbonate Flame Retardant | 70.000 | 70.000 | 70.000 | 70.000 | 70.000 |
| DPHP no antioxidant | 0.000 | 80.000 | 68.000 | 64.000 | 60.000 |
| DUP w/antioxidant | 0.000 | 0.000 | 12.000 | 16.000 | 20.000 |
| DIDP w/antioxidant | 80.000 | 0.000 | 0.000 | 0.000 | 0.000 |

| **Table 2 - Mixing Instructions** | | |
|---|---|---|
| **#4 Roll Mill / 10L Henschel/ Banbury** | | |
| | Standard Conditions | |
| RESIN | Initial | |
| STABILIZER (solids & liquids) | Directly after Resin | |
| PLASTICIZER (includes ESO/GMO) | (140 +/- 5 °F) 60 +/- 2,8°C | |
| PROCESSING AIDS | (50 +/- 5 °F) 65,6 +/- 2,8°C | |
| LUBES | (150 +/- 5 °F) 65,6 +/- 2,8°C | |
| FILLERS | (160 +/- 5 °F) 71,1 +/- 2,8°C | |
| PIGMENTS | (160 +/- 5 °F) 71,1 +/- 2,8°C | |
| Titanium Dioxide | (160 +/- 5 °F) 71,1 +/- 2,8°C | |
| Henschel Drop Temp | (180 +/- °F) 82,2 - 87,8 °C | |
| Cooler Drop Temp | (140 - 150 °F) 60 - 65,6 °C | |
| **Transfer Powder to Banbury** | | |
| Set jacket at 148,9 - 154,4°C (300 - 310°F) & speed to 100 rpm | | |
| Raise ram twice before dropping fused material (∼260°F & 290°F) ∼126,7°C & 143,3°C | | |
| Drop Compound at 157,2 - 160°C (315-320 °F) (note sucking sound when fused) | | |
| Drop Plenum at 171,1°C (340°F) (note sucking sound when fused) | | |
| **#14 Mill Conditions** | | |
| | Compound | |
| Initial #4 miU roll set up: | Front | Back |
| Mill rolls Temps: | 176,7°C (350 °F) | 171,1°C (340 °F) |
| Roll speed: | 18 rpm | 22 rpm |
| Roll gap: (75-90 mils) 1,91-2,29 mm | | |
| Mill for 4 minutes. | | |
| Set gap 127-254 micasus (∼ 5-10 mils) greater than plaque thickness. | | |
| Remove mill strip and cut out 127 x 127 mm (6" x 6") samples for testing. | | |

| **Table 3 - Performance Results After Oven Aging for 7 Days at 121°C Samples of 0.762 mm Thickness** | | | | | |
|---|---|---|---|---|---|
| Example | A | B | 1 | 2 | 3 |
| Tensile Strength - unaged | 1580 | 1500 | 1700 | 1550 | 1570 |
| Elongation - unaged | 316 | 315 | 305 | 325 | 331 |
| Wight Loss | -10.2% | -13.6% | -12.1% | -11.6% | -10.7% |
| Tensile Strength - aged | 1760 | 1580 | 1570 | 1530 | 1810 |
| Elongation - aged | 162 | 42 | 60 | 104 | 158 |
| Retention of Tensile strength | 111% | 105% | 97% | 99% | 115% |
| Retention of tensile Elongation | 51% | 13% | 18% | 32% | 48% |

The comparison of Example A to Examples 1-3 show that weight loss is comparable and retention of elongation is similar to DIDP at the test conditions specified in UL 1581 standard for 90°C testing.

The invention is not limited to the above embodiments. The claims follow.

## Claims

1. A polyvinyl chloride compound comprising:
(a) polyvinyl chloride and
(b) a blend of di-propylheptylphthalate and a second plasticizer selected from the group consisting of di-undecylphthalate and undecylphthalate, wherein ratio of the blend of (di-propylheptylphthalate): (second plasticizer) ranges from (10):(1) to (1):(3).

2. The compound of claim 1, wherein the second plasticizer is di-undecylphthalate.

3. The compound of claim 1, wherein the polyvinyl chloride comprises polyvinyl chloride homopolymer or copolymer.

4. The compound of claim 3, wherein the polyvinyl chloride copolymer is a copolymerization of vinyl chloride with one or more comonomers selected from the group consisting of (meth)acrylic acids; alkyl esters of (meth)acrylic acid; hydroxyalkyl esters of (meth)acrylic acid; glycidyl esters of (meth)acrylic acid; unsaturated dicarboxylic acids and their anhydrides; (meth)acrylamides; (meth)acrylonitriles; maleimides; olefins; vinylidene halides; vinyl esters; vinyl ethers; diallyl phthalate; ethylene glycol dimethacrylate; methylene bis-acrylamide; triacrylyl triazine; divinyl ether; allyl silanes; and mixtures thereof.

5. The compound of claim 1, further comprising an additive selected from the group consisting of lubricants, thermal stabilizers, ultra-violet light stabilizers, antioxidants, impact modifiers, processing aids, fillers, pigments, flame retardants, reinforcing materials, adhesion promoters, biocides, anti-fogging agents, anti-static agents, bonding agents, blowing agents, foaming agents, dispersants, extenders, smoke suppressants, initiators, micas, release agents, slip agents, anti-blocking agents, stearates, viscosity regulators, waxes, and combinations of them.

6. The compound of claim 1, wherein ratio of the blend of (di-propylheptylphthalate): (second plasticizer) ranges from (5):(1) to (2):(1).

7. The compound of claim 1 wherein the parts by weight of the plasticizer blend can range from 10 to 150 parts per.100 parts of polyvinyl chloride.

8. The compound of claim 1, in the form of powder, cubes, or pellets.

9. An extruded article made from a compound of any of claims 1-8.

10. A molded article made from a compound of any of claims 1-8.

## Patentansprüche

1. Polyvinylchloridcompound, umfassend:
(a) Polyvinylchlorid und
(b) eine Mischung aus Dipropylheptylphthalat und einem zweiten Weichmacher ausgewählt aus der Gruppe bestehend aus Diundecylphthalat und Undecylphthalat, wobei das Verhältnis der Mischung aus (Dipropylheptylphthalat):(zweitem Weichmacher) von (10):(1) bis (1):(3) ist.

2. Compound nach Anspruch 1, wobei der zweite Weichmacher Diundecylphthalat ist.

3. Compound nach Anspruch 1, wobei das Polyvinylchlorid Polyvinylchloridhomopolymer oder -copolymer umfasst.

4. Compound nach Anspruch 3, wobei das Polyvinylchloridcopolymer eine Copolymerisation aus Vinylchlorid mit einem oder mehreren Comonomeren ist, ausgewählt aus der Gruppe bestehend aus: (Meth)acrylsäuren; Alkylestern von (Meth)acrylsäure; Hydroxyalkylestern von (Meth)acrylsäure; Glycidylestern von (Meth)acrylsäure; ungesättigten Dicarbonsäuren und deren Anhydriden; (Meth)acrylamiden; (Meth)acrylnitrilen; Maleimiden; Olefinen; Vinylidenhalogeniden; Vinylestern; Vinylethern; Diallylphthalat; Ethylenglycoldimethacrylat; Methylenbisacrylamid; Triacrylyltriazin; Divinylether; Allylsilanen; und Mischungen davon.

5. Compound nach Anspruch 1, weiterhin umfassend ein Additiv ausgewählt aus der Gruppe bestehend aus Schmiermitteln, thermischen Stabilisatoren, UV-LichtStabilisatoren, Antioxidationsmitteln, Schlagzähigkeitsmodifikatoren, Verarbeitungshilfsmitteln, Füllstoffen, Pigmenten, Flammschutzmitteln, Verstärkungsmaterialien, Haftverbesserern, Bioziden, Antibeschlagmitteln, antistatischen Mitteln, Haftvermittlern, Treibmitteln, Schaummitteln, Dispergiermitteln, Streckmitteln, rauchunterdrückenden Mitteln, Startern, Glimmer, Trennmitteln, Gleitmitteln, Antiblockiermitteln, Stearaten, Viskositätsregulatoren, Wachsen, und Kombinationen davon.

6. Compound nach Anspruch 1, wobei das Verhältnis der Mischung aus (Dipropylheptylphthalat):(zweitem Weichmacher) von (5):(1) bis (2):(1) ist.

7. Compound nach Anspruch 1, wobei die Gewichtsteile der Weichmachermischung von 10 bis 150 Teile pro 100 Teile Polyvinylchlorid sein können.

8. Compound nach Anspruch 1, in Form von Pulver, Würfeln oder Pellets.

9. Extrudierter Artikel, hergestellt aus einem Compound nach einem der Ansprüche 1 bis 8.

10. Geformter Artikel, hergestellt aus einem Compound nach einem der Ansprüche 1 bis 8.

## Revendications

1. Composé de poly(chlorure de vinyle) comprenant :
(a) du poly(chlorure de vinyle) et
(b) un mélange de phtalate de di-propylheptyle et un second plastifiant choisi dans le groupe constitué par le phtalate de di-undécyle et le phtalate d'undécyle, où le rapport du mélange (phtalate de di-propylheptyle) : (second plastifiant) varie de (10) : (1) à (1) : (3).

2. Composé selon la revendication 1, dans lequel le second plastifiant est le phtalate de di-undécyle.

3. Composé selon la revendication 1, dans lequel le poly(chlorure de vinyle) comprend un homopolymère ou copolymère de poly(chlorure de vinyle).

4. Composé selon la revendication 3, dans lequel le copolymère de poly(chlorure de vinyle) est une copolymérisation de chlorure de vinyle avec un ou plusieurs comonomères choisis dans le groupe constitué par les acides (méth)acryliques ; les esters d'alkyle d'acide (méth)acrylique ; les esters d'hydroxyalkyle d'acide (méth)acrylique ; les esters de glycidyle d'acide (méth)acrylique ; les acides dicarboxyliques insaturés et leurs anhydrides ; les (méth)acrylamides ; les (méth)acrylonitriles ; les maléimides ; les oléfines ; les halogénures de vinylidène ; les esters de vinyle ; les vinyl éthers ; le phtalate de diallyle ; le diméthacrylate d'éthylène glycol ; le méthylène bis-acrylamide ; la triacrylyl triazine ; le divinyl éther ; les allyl silanes ; et leurs mélanges.

5. Composé selon la revendication 1, comprenant en outre un additif choisi dans le groupe constitué par les lubrifiants, les stabilisants thermiques, les stabilisants à la lumière ultraviolette, les antioxydants, les agents modifiant la résistance aux chocs, les aides au traitement, les charges, les pigments, les agents ignifuges, les matériaux de renforcement, les promoteurs d'adhérence, les biocides, les agents anti-voile, les agents antistatiques, les agents de liaison, les agents de soufflage, les agents de moussage, les dispersants, les agents d'expansion, les suppresseurs de fumée, les initiateurs, les micas, les agents de démoulage, les agents de glissement, les agents anti-bloquants, les stéarates, les régulateurs de viscosité, les cires, et leurs combinaisons.

6. Composé selon la revendication 1, dans lequel le rapport du mélange (phtalate de di-propylheptyle) : (second plastifiant) varie de (5) : (1) à (2) : (1).

7. Composé selon la revendication 1, dans lequel les parties en poids du mélange de plastifiants peuvent varier de 10 à 150 parties pour 100 parties de poly(chlorure de vinyle).

8. Composé selon la revendication 1, sous la forme d'une poudre, de cubes ou de pastilles.

9. Article extrudé préparé à partir d'un composé de l'une quelconque des revendications 1 à 8.

10. Article moulé préparé d'un composé de l'une quelconque des revendications 1 à 8.
